# EUROPEAN PATENT APPLICATION

(11) **EP 4 366 140 A1**
(43) Date of publication of application: **08.05.2024**
(21) Application number: 22205733.3
(22) Date of filing: 07.11.2022
(51) Int. Cl.: H02K 5/20, H02K 11/33

(54) **A COMPACT ELECTRIC DRIVE WITH A STRUCTURE ALLOWING EFFICIENT HEAT DISSIPATION**

(71) Applicant: Valeo eAutomotive Germany GmbH, 91056 Erlangen (DE)
(72) Inventor: Haas, Bernd, 91056 C/o VeA, Erlangen (DE); REYMANN, Markus, 91056 C/o VeA, Erlangen (DE)
(74) Representative: Valeo Powertrain Systems

(57) **Abstract**

The invention concerns an electric drive (100) comprising an electric motor (101), a power module (105), and a coolant jacket (120), the coolant jacket (120) comprising a body which comprises an inner peripheral wall (121) and an outer peripheral wall (122). According to the invention:
the electric motor (101) is accommodated and surrounded by the inner peripheral wall (121) of the coolant jacket (120);
the power module (105) is mounted on one or plural interface zones of the outer peripheral wall (122) of the coolant jacket (120);
the coolant jacket (120), being located between the electric motor (101) and the power module (105), is configured to dissipate heat generated by the electric motor (101) and by the power module (105).

## Description

The present invention belongs to the field of electric drives configured to be on board of an automotive vehicle, such as an electric vehicle (EV) or a hybrid electric automotive vehicle (HEV).

The present invention relates in particular to a compact electric drive with a structure allowing efficient heat dissipation.

As is known, an electric or a hybrid automotive vehicle comprises an electric drive comprising devices such as an electric motor (i.e. a rotary electric machine), a gearbox and an inverter, etc. The electric motor needs to be supplied with electric power, for instance by a high voltage power supply battery, to deliver a mechanical power in order to ensure the propulsion of the vehicle. The electric motor comprises a stator, referring to a fixed part of the electric motor, and a rotor, referring to a rotating part of the electric motor. The inverter is configured to convert a direct current (DC) voltage coming from a high-voltage power supply battery into an alternating current (AC) voltage so as supply the stator of the electric motor with the AC voltage.

During operation of the electric drive, the devices and components generate heat and must be cooled to be operational. The electric drive comprises several cooling modules respectively configured to individually cool the electric motor, the inverter and the gearbox. For example, the inverter comprises electronic components generally arranged on one side of a substrate, and a cooling module, which is arranged on the opposite side of the substrate, dissipates the heat generated by the electronic components while the inverter is in operation. The cooling module is for example a heatsink. Several types of heatsinks can be utilized, such as a pin fin heatsink or a plate fin heatsink. The heatsink may comprise pins generally made of metal and facilitate thus heat exchange as well as heat dissipation.

The cooling module may further comprise a chamber filled with a coolant, the chamber being arranged to be in contact with said opposite side of the substrate. The coolant is a cooling fluid such as water, oil, glycol, air, etc. The heatsink may be located inside the chamber, and the pins of the heatsink are immersed in the coolant. The heat generated by the electronic components of the inverter is transmitted from the substrate to the heatsink, and is then removed as the coolant flows.

However, the efficiency of heat dissipation, achieved by such a cooling module, should be further improved. Efficient cooling of the electric module makes it possible to increase the service life of the electric drive. In addition, as mentioned above, as the conventional electric drive comprises several cooling modules respectively configured to individually dissipate the heat generated by each of the devices and components of the electric drive, which may require a more complicated circuit design. Moreover, in order to save space and to reduce the packaging size, certain models of vehicles require more compact electric drives, but the above-mentioned conventional electric drive is too bulky to be used in these vehicles.

There is therefore a need of a new structure of the electric drive which is sufficiently compact to save space. In addition, the heat generated by the devices and components of the electric drive needs to be efficiently dissipated when the electric drive is in operation.

The present invention relates to an electric drive comprising an electric motor, a power module, and a coolant jacket, the coolant jacket comprising a body which comprises an inner peripheral wall and an outer peripheral wall; the electric drive being characterized in that:
the electric motor is accommodated and surrounded by the inner peripheral wall of the coolant jacket;
the power module is mounted on one or plural interface zones of the outer peripheral wall of the coolant jacket;
the coolant jacket, being located between the electric motor and the power module, is configured to dissipate heat generated by the electric motor and by the power module.

Compared to a conventional electric drive comprising a heatsink, the electric drive according to the invention is sufficiently compact to save space and to reduce the packaging size. In addition, the electric drive according to the invention allows to efficiently dissipate heat generated by the devices and components of the electric drive when the electric drive is in operation.

According to an embodiment, the power module comprises devices and components which are separately placed, and are respectively mounted on one of the interface zones of the outer peripheral wall.

Advantageously, the interface zones shall be evenly distributed on the outer peripheral wall.

According to an embodiment, the coolant jacket comprises a coolant passage formed within the body of the coolant jacket, the coolant passage being configured to allow a coolant to pass through.

Especially, the coolant passage, formed between the inner peripheral wall and the outer peripheral wall, approximately fills the thickness of the body of the coolant jacket.

According to an embodiment, the coolant passage is a helical channel.

According to an embodiment:
the inner peripheral wall is a cylindrical tubular wall, and defines an inner hollow portion to accommodate the electric motor;
the outer peripheral wall is a cylindrical tubular wall.

In particular, the power module may comprise at least one of following devices and components: elements of an inverter, a DC-Link Capacitor.

The power module may for example comprise busbars which are annular or arc-shaped.

Advantageously, the coolant jacket comprises pin fins formed on one side of the interface zone(s) of the outer peripheral wall; the power module mounted on the opposite side of the interface zone(s).

Advantageously, the pin fins are immersed in a coolant in the coolant jacket.

Advantageously, the inner and the outer peripheral walls are made of a metal material of high thermal conductivity.

According to an embodiment, the electric drive is an e-Axle electric drive.

Another aspect of the invention is the electric drive, comprising the electric motor and an inverter configured to convert a direct current voltage coming from a high-voltage power supply battery into an alternating current voltage so as supply the stator of the electric motor with the AC voltage. The AC voltage may be a multiphase AC voltage, especially a three-phase voltage. For instance, the rotor is advantageously supplied with a DC voltage. Preferably, a unique power converter is used for supplying both the AC voltage to the stator and the DC voltage to the rotor.

A further aspect of the invention is an electric of a hybrid vehicle, comprising the above-mentioned electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

The invention will be better understood on reading the description that follows, and by referring to the appended drawings given as non-limiting examples, in which identical references are given to similar objects and in which:
- Figure 1 illustrates an electric drive according to an embodiment of the invention;
- Figure 2 illustrates a channel which is formed within a body of a coolant jacket and surrounds an electric motor of the electric drive, according to an embodiment of the invention;
- Figure 3 is a schematic diagram of an automotive electric or a hybrid vehicle comprising the electric drive according to an embodiment of the invention.

Several embodiments of the present invention will be detailed hereafter with reference to the drawings. It will be apparent to those skilled in the art from this present disclosure that the following description of these embodiments of the present invention are provided for illustration only and not for the purpose of limiting the invention as defined by the appended claims and their equivalents.

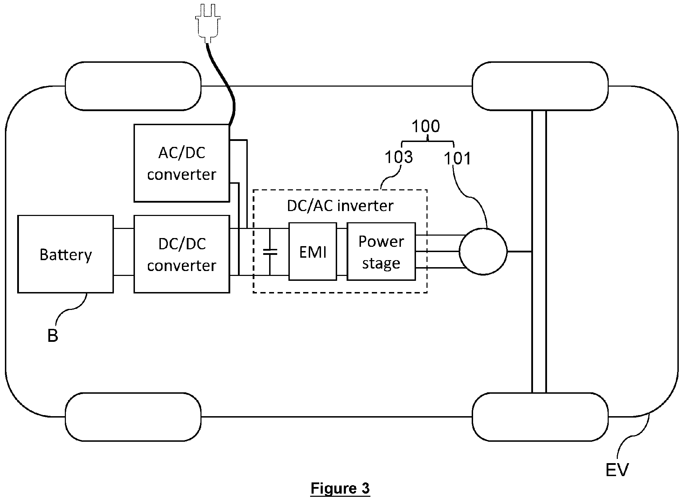

In reference to Figure 3, an aspect of the invention is an electric vehicle or a hybrid electric automotive vehicle comprising wheels and an electric drive 100 configured to drive at least indirectly at least one of the wheels of the vehicle. The vehicle may comprise a high-voltage power supply battery B, preferably a rechargeable battery, for providing electric power to the electric drive 100. Although, the invention is not limited to this domain.

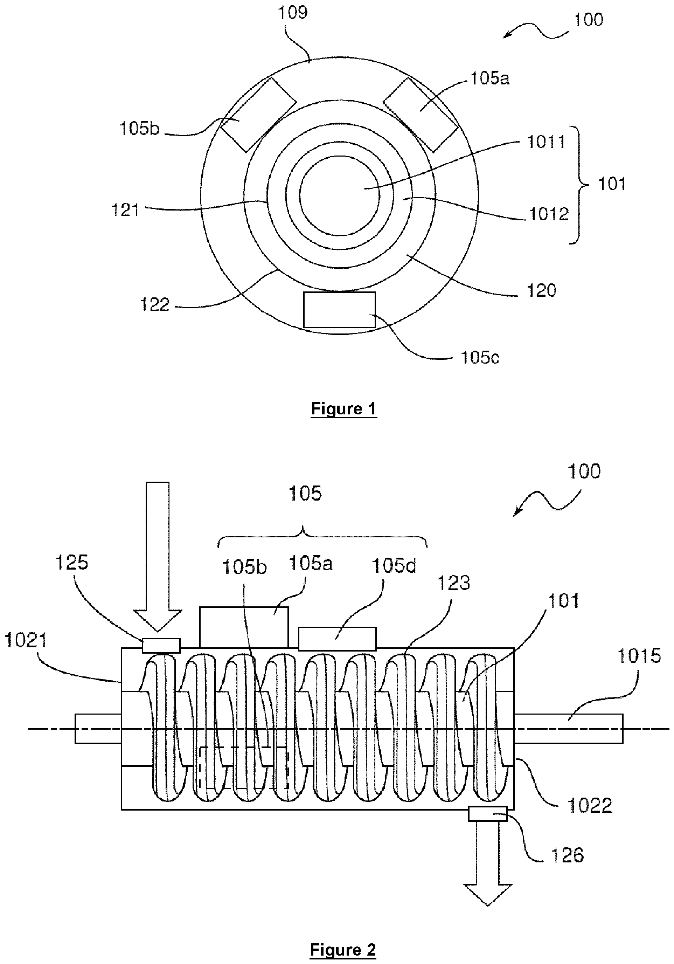

Another aspect of the invention is the electric drive 100, as illustrated in Figures 3 and 1. The electric drive 100 comprises a housing 109, an electric motor (i.e. a rotary electric machine) 101, a coolant jacket 120 and a power module 105. The housing 109 is configured to accommodate the electric motor 101, the coolant jacket 120 and the power module 105. The coolant jacket 120, located between the electric motor 101 and the power module 105, is configured to dissipate heat generated by the electric motor 101 and by the power module 105 when the electric drive 100 is in operation. The coolant jacket 120 will be described in detail after the description of the electric motor 101 and of the power module 105.

The electric motor 101 comprises a rotor 1011 (referring to a rotating part of the electric motor 101) and a stator 1012 (referring to a fixed part of the electric motor 101). The rotor 1011 has a cylindrical body comprising two axial ends, and rotates around a rotor shaft 1015 (as shown in Figure 2) which is an axis of rotation. The rotor 1011 is, in particular, an electric excited rotor. Most frequently, the electric motor 101 is a permanent magnet motor. The stator 1012 surrounds coaxially the rotor 1011. The electric motor 101 has a cylindrical shape with two axial ends 1021, 1022. The electric motor 101 is arranged to be accommodated and be surrounded by an inner peripheral wall 121 of the coolant jacket 120. The coolant jacket 120 could be integrated in a housing of the electric motor 101, or alternatively, be a separate device distinct from the electric motor 101.

The power module 105 comprises an inverter 103 configured to convert a direct current (DC) voltage coming from the high-voltage power supply battery B into an alternating current (AC) voltage in order to supply the stator 1012 of the electric motor 101 with AC voltage. The electric motor 101 may in particular be a three-phase electric motor supplied with a three-phase AC voltage. The rotor 1011 is advantageously supplied with a DC voltage. However, the invention is also valid for permanent magnet motors. Preferably, a unique power converter is used for supplying both the AC voltage to the stator 1012 and the DC voltage to the rotor 1011. The coolant jacket 120 comprises at least one interface zone arranged on an outer peripheral wall 122 of the coolant jacket 120. The power module 105 is mounted on the at least one interface zone of the coolant jacket 120. In another embodiment as below, the coolant jacket 120 comprises plural interface zones.

Moreover, the power module 105 comprises, not only the inverter 103, but also other devices, components or elements, such as a DC-Link Capacitor 105d and bobbins, etc. The devices and components of the power module 105 can be all accommodated in one housing of the power module 105. Alternatively and preferably, in order to avoid heat generated by the devices and components of the power module 105 being concentrated in one or a few regions in the electric drive 100, the devices and components (e.g. "105a", "105b", "105c", "105d" in Figures 1 and 2) are separately placed, and are respectively mounted on one of interface zones of the coolant jacket 120. Advantageously, the devices and components of the power module 105 can be evenly placed on the outer peripheral wall 122 of the coolant jacket 120. In other words, said interface zones are evenly distributed on the outer peripheral wall 122. The interface zones are radially arranged and, preferably, are equally spaced. For example, as illustrated in Figure 1, the inverter 103 is a three-phase inverter comprising three components 105a, 105b and 105c which are respectively mounted on one of the interface zones of the coolant jacket 120, wherein the interface zones are evenly distributed on the outer peripheral wall 122.

The electric drive 100 further comprises busbars which may be arranged on the outer peripheral wall 122 of the coolant jacket 120 so as to be cooled by the coolant jacket 120. The devices and components of the power module 105 and the stator 1012 of the electric motor 101 can be electrically connected one to another.

The coolant jacket 120 is in a tube shape, and comprises a body comprising the inner peripheral wall 121 and the outer peripheral wall 122. The inner peripheral wall 121 is a cylindrical tubular wall, and defines an inner hollow portion to accommodate the electric motor 101. The outer peripheral wall 122 is preferably a cylindrical tubular wall, and the body of the coolant jacket 120 is a cylindrical tubular body, as depicted in Figure 1. The busbars are preferably annular or arc-shaped, and can thus firmly fit the outer peripheral wall 122 so as to be cooled by the coolant jacket 120.

The inner peripheral wall 121 and the outer peripheral wall 122 are preferably made of a metal material of high thermal conductivity such as steel, aluminum or copper. Advantageously, the inner and the outer peripheral walls 121, 122 are made of aluminum alloy or copper alloy.

In addition, the coolant jacket 120 comprises, as described in the previous paragraphs, the one or plural interface zones arranged on the outer peripheral wall 122. The devices and components (105a, 105b, 105c, 105d) of the power module 105 are mounted on and sealed against the one or plural interface zones of the coolant jacket 120.

The coolant jacket 120 further comprises a coolant passage formed within said body defined by the inner and the outer peripheral walls 121 and 122, and is configured to allow a coolant to pass through. The coolant jacket 120 further comprises a coolant inlet 125 and a coolant outlet 126 which are connected to the coolant passage and are respectively configured to conduct and to discharge the coolant. The coolant is a thermal fluid and is preferably oil, water, glycol or a glycol-water mixture. As the electric motor 101 is in contact with the inner peripheral wall 121 while the power module 105 are in contact with the interface zone(s) of the outer peripheral wall 122, a heat exchange occurs through the inner peripheral wall 121 and the outer peripheral wall 122 as well as through the coolant.

Preferably, the coolant inlet 125 is located at, or close to one of two axial ends of the coolant jacket 120. The coolant outlet 126 is located at, or close to the other one of the two axial ends of the coolant jacket 120. The coolant inlet 125 and the coolant outlet 126 are respectively an axial inlet and an axial outlet via which the coolant is conducted in and is discharged from the coolant passage (e.g. the channel 123), according to a direction parallel to a central axis of the coolant jacket 120, wherein the central axis is identical to the axis of rotation 1015. Alternatively, the coolant inlet 125 and the coolant outlet 126 are respectively a radial inlet and a radial outlet via which the coolant is conducted in and is discharged from the coolant passage.

Furthermore, the coolant jacket 120 preferably comprises pin fins formed on one side of the interface zone(s) so as to increase heat transfer efficiency. The pin fins are immersed in the coolant. The devices and components of the power module 105 are mounted on the opposite side of said interface zone(s) of the outer peripheral wall 122. Therefore, the heat can be more efficiently transferred from the power module 105 mounted on the interface zones(s), through the pin fins located under the power module 105, to the coolant flowing in the coolant passage (e.g. the channel 123) formed within the body of the coolant jacket 120.

With the coolant jacket 120, the electric drive 100 does no longer need to comprise a heatsink. Therefore, compared to a conventional electric drive comprising a heatsink, the electric drive according to the invention saves space, reduces packaging size and reduces costs. This above-mentioned structure of the electric drive according to the invention is particularly suitable for a compact electric drive design, such as an e-Axle electric drive with its elements (e.g. the electric motor and the power module) closely connected to each other. Moreover, as mentioned above, this structure improves the heat transfer efficiency.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. An electric drive (100) comprising an electric motor (101), a power module (105), and a coolant jacket (120), the coolant jacket (120) comprising a body which comprises an inner peripheral wall (121) and an outer peripheral wall (122); the electric drive being **characterized in that**:
- the electric motor (101) is accommodated and surrounded by the inner peripheral wall (121) of the coolant jacket (120);
- the power module (105) is mounted on one or plural interface zones of the outer peripheral wall (122) of the coolant jacket (120);
- the coolant jacket (120), being located between the electric motor (101) and the power module (105), is configured to dissipate heat generated by the electric motor (101) and by the power module (105).

2. The electric drive (100) according to claim 1, wherein the power module (105) comprising devices and components (105a, 105b, 105c, 105d) which are separately placed, and are respectively mounted on one of the interface zones of the outer peripheral wall (122).

3. The electric drive (100) according to the preceding claim, wherein the interface zones are evenly distributed on the outer peripheral wall (122).

4. The electric drive (100) according to any one of the preceding claims, wherein the coolant jacket (120) comprises a coolant passage formed within the body of the coolant jacket (120), the coolant passage being configured to allow a coolant to pass through.

5. The electric drive (100) according to the preceding claim, wherein the coolant passage, formed between the inner peripheral wall (121) and the outer peripheral wall (122), approximately fills the thickness of the body of the coolant jacket (120).

6. The electric drive (100) according to claim 4 or claim 5, wherein the coolant passage is a helical channel.

7. The electric drive (100) according to any one of the preceding claims, wherein:
- the inner peripheral wall (121) is a cylindrical tubular wall, and defines an inner hollow portion to accommodate the electric motor (101);
- the outer peripheral wall (122) is a cylindrical tubular wall.

8. The electric drive (100) according to any one of the preceding claims, wherein the power module (105) comprises at least one of following devices and components: elements (105a, 105b, 105c) of an inverter, a DC-Link Capacitor.

9. The electric drive (100) according to any one of the preceding claims, wherein the power module (105) comprises busbars which are annular or arc-shaped.

10. The electric drive (100) according to any one of the preceding claims, wherein the coolant jacket (120) comprises pin fins formed on one side of the interface zone(s) of the outer peripheral wall (122); the power module (105) being mounted on the opposite side of the interface zone(s).

11. The electric drive (100) according to the preceding claim, wherein the pin fins are immersed in a coolant in the coolant jacket (120).

12. The electric drive (100) according to any one of the preceding claims, wherein the inner and the outer peripheral walls (121, 122) are made of a metal material of high thermal conductivity.

13. The electric drive (100) according to any one of the preceding claims, being an e-Axle electric drive.
